# EUROPÄISCHE PATENTSCHRIFT

(11) **EP 2 553 307 B1**
(45) Veröffentlichungstag und Bekanntmachung des Hinweises auf die Patenterteilung: **10.08.2016**
(21) Anmeldenummer: 11713208.4
(22) Anmeldetag: 25.03.2011
(51) Int. Cl.: B22D 11/128, B21B 39/00, C03B 35/16, C03B 35/18, B21B 27/08, F16L 27/08

(54) **LAGERUNG UND DREHEINFÜHRUNG FÜR EINE GEKÜHLTE ROLLE**
BEARING ARRANGEMENT AND ROTARY INLET FOR A COOLED ROLLER
SUPPORT ET INSERT ROTATIF POUR UN ROULEAU REFROIDI

(30) Priorität: 26.03.2010 AT 4922010
(43) Veröffentlichungstag der Anmeldung: 06.02.2013
(73) Patentinhaber: Primetals Technologies Austria GmbH, 4031 Linz (AT)
(72) Erfinder: POEPPL, Johann, A-4202 Kirchschlag (AT); PÜHRINGER, Thomas, A-4020 Linz (AT); THOENE, Heinrich, A-4020 Linz (AT); WIMMER, Franz, A-4752 Riedau (AT)
(74) Vertreter: Metals@Linz
(86) Internationale Anmeldenummer: PCT/EP2011/054616
(87) Internationale Veröffentlichungsnummer: WO 2011/117383

(56) Entgegenhaltungen:
- EP-A1- 1 048 880
- EP-A1- 1 662 191
- WO-A1-03/004919

## Beschreibung

### Gebiet der Technik

Die vorliegende Erfindung betrifft eine Lagerung und eine Dreheinführung für eine gekühlte Rolle gemäß dem Oberbegriff des Anspruchs 1.

### Stand der Technik

Aus der Schrift EP 1 048 880 A1 ist eine Lagerung und eine Dreheinführung für eine gekühlte Rolle bekannt, umfassend
- einen Lagerbock;
- einen rollenförmigen Rollenkörper mit einem zumindest eintrittsseitig zentralen Kühlmittelkanal für das Kühlmedium;
- zumindest ein Lager zur drehbaren Abstützung des Rollenkörpers gegenüber dem Lagerbock, wobei die Kräfte vom Rollenkörper über das Lager auf den Lagerbock übertragen werden;
- einen äußeren Lagerdeckel der lösbar mit dem Lagerbock verbunden ist; und
- ein mit dem äußeren Lagerdeckel verbundenes Kühlmittelrohr zur Einführung des Kühlmediums in den Kühlmittelkanal des Rollenkörpers.

Bei dieser Ausführungsform ist es zwar möglich, das Kühlmittelrohr einschließlich des Dichtungspakets auch im montierten Zustand des Lagerdeckels - d.h. ohne dass der Lagerdeckel beim Wechseln demontiert werden muss - zu wechseln, allerdings beinhaltet das Dichtungspaket viele Einzelteile, wie ein Federpaket, einen sogenannten "schwebenden Gleitring", einen Dichtungsträger sowie zwei kooperierende Gleitringe, sodass ein schneller Wechsel des Dichtungspakets nicht möglich ist.

Ferner ist aus der Schrift EP 1 662 191 A1 eine Lagerung und eine Dreheinführung für eine gekühlte Rolle bekannt, die zusätzlich zu den zuvor aufgelisteten Merkmalen ein hülsenförmiges Dichtelement mit einer inneren und einer äußeren Mantelfläche umfasst, wobei das stillstehende Kühlmittelrohr mit dem Rollenkörper über das hülsenförmige Dichtelement verbunden ist, wobei die innere Mantelfläche dichtend mit dem stillstehenden Kühlmittelrohr und die äußere Mantelfläche dichtend mit dem rotierbaren Rollenkörper verbunden ist, und wobei das Dichtelement auf seiner äußeren Mantelfläche zumindest eine, bevorzugt zumindest zwei, statische Dichtung und auf seiner inneren Mantelfläche zumindest eine, bevorzugt zumindest zwei, dynamische Dichtung aufweist.

Bei letzterer Ausführungsform ist ebenfalls ein Dichtungspaket bestehend aus vielen Einzelteilen - nämlich aus besagtem Dichtelement, einer in das Dichtelement eingesetzten Hülse, zwei gegeneinander gleitenden Gleitringen, einem Dichtungsträger und einer Abdichteinrichtung - vorgesehen, sodass auch bei dieser Ausführungsform ein schneller Wechsel des Dichtungspakets nicht möglich ist.

### Zusammenfassung der Erfindung

Aufgabe der Erfindung ist es, eine einfache Lagerung und Dreheinführung für eine gekühlte Rolle bei gleichbleibend hoher Zuverlässigkeit darzustellen, sodass einerseits ein Dichtungselement nur wenige Einzelteile aufweist und andererseits ein schneller Wechsel des Dichtungselements möglich ist.

Diese Aufgabe wird von einer Vorrichtung der eingangs genannten Art dadurch gelöst, dass das Dichtelement um einen Umfang des Kühlmittelrohrs herum angeordnet ist. Beim hülsenförmigen Dichtelement handelt es sich nur mehr um ein einziges Einzelteil, das bei Verschleiß einfach und schnell gewechselt werden kann. Die äußere Mantelfläche des Dichtelements dichtet fluiddicht den axialen Kühlmittelkanal im Rollenkörper statisch ab; die innere Mantelfläche des Dichtelements dichtet fluiddicht das stillstehende Kühlmittelrohr gegenüber dem mitrotierenden Dichtelement dynamisch ab. Durch die konstruktive Kopplung der dynamischen und statischen Abdichtung in einem Dichtelement werden Federelemente, elastische Hülsen oder dgl. obsolet, da beispielsweise im Fall einer Wärmedehnung das Kühlmittelrohr gegenüber dem Dichtelement verschieblich, d.h. gleitend, ausgebildet ist. Das Dichtelement ist bevorzugt aus PTFE ausgeführt, sodass eine hohe chemische Beständigkeit gegenüber unterschiedlichen Kühlmedien (im Allgemeinen wird als Kühlmedium Wasser gegebenenfalls mit Zusätzen verwendet) gegeben ist. Dem Fachmann ist klar, dass eine Rolle aufgrund der hohen einwirkenden Kräfte mehrfach gelagert werden muss. Im einfachsten Fall wird beidseitig der Rolle je eine erfindungsgemäße Lagerung und Dreheinführung vorgesehen, wobei eine erste Dreheinführung zum Einführen des Kühlmediums und eine zweite Dreheinführung zum Ausführen des Kühlmediums verwendet wird.

Vorzugsweise weist der Lagerbock wenigstens einen Kühlmittelkanal zur Führung eines unter Druck stehenden Kühlmediums auf, und weist der äußere Lagerdeckel zumindest einen Kühlmittelkanal für das Kühlmedium auf, sodass das Kühlmedium vom Lagerbock in den äußeren Lagerdeckel, vom äußeren Lagerdeckel in das Kühlmittelrohr, und vom Kühlmittelrohr in den Kühlmittelkanal des Rollenkörpers geführt werden kann. Mittels dieser Ausführungsform ist eine einfache und robuste Führung des Kühlmediums gewährleistet.

Nach einer bevorzugten Ausführungsform ist eine statische Dichtung als ein O-Ring und eine dynamische Dichtung als ein Gleitring ausgebildet.

Mittels der beiden letztgenannten Ausführungsformen wird eine hohe Dichtheit sowohl bei der statischen Abdichtung des Kühlmediums zwischen den relativ zueinander unbewegten Bauteilen (konkret dem Rollenkörper und dem Dichtelement) als auch bei der dynamischen Abdichtung des Kühlmediums zwischen gegeneinander bewegten Bauteilen (konkret dem rotierenden Dichtelement und dem stillstehenden Kühlmittelrohr) erreicht. Derartige Dichtelemente sind dem Fachmann z.B. unter der Bezeichnung "Prelonringe" (siehe http://www.prelon.de) bekannt.

Bezüglich der Zuverlässigkeit der Abdichtung ist es vorteilhaft, das Dichtelement im Bereich einer Lagermittenebene des Lagers, vorzugsweise symmetrisch zur Lagermittenebene, anzuordnen. Unter der Lagermittenebene wird die Normalebene auf die Achse der Strangführungsrolle bezeichnet, die mittig durch das Lager verläuft, wobei in diesem Bereich die Durchbiegung der Rolle als vernachlässigbar angesehen werden kann.

Es ist zweckmäßig, dass der Rollenkörper mit einem Rollenmantel drehfest verbunden ist. In diesem Fall kann der Rollenmantel besonders verschleißfest ausgeführt sein, der bei Verschleiß einfach wechselbar ausgebildet ist.

Aufgrund der hohen Lagerkräfte ist es vorteilhaft, ein Lager als ein Wälzlager, insbesondere ein Pendelrollenlager, auszubilden.

Da die Zuverlässigkeit eines Lagers in hohem Maße von der Reinheit abhängt, ist es vorteilhaft, das Lager beidseitig abgedichtet (beispielsweise als beidseitig abgedichtetes Lager mit Deck- oder Dichtscheiben oder als offenes Lager mit externen Dichtungen) auszubilden; weiters ist es vorteilhaft, das Lager mit einer Fettschmierung, bevorzugt einer Frischfettschmierung, auszubilden.

Eine besonders einfache geometrische Form des Rollenkörpers ist erreichbar, wenn eine Stirnfläche des Rollenkörpers mit einem ringförmigen Dichtungslaufring verbunden ist. In diesem Fall ist der ringförmige Dichtungslaufring beispielsweise über Schrauben mit dem Rollenkörper verbunden, wobei der Dichtungslaufring einen Ansatz aufweisen kann, um einen Ring des Lagers abzustützen.

Nach einer Ausführungsform ist ein Lagerbock in Richtung der Rollenmittenebene mit einem inneren Lagerdeckel lösbar verbunden, wobei gegebenenfalls der innere Lagerdeckel den Innenring oder den Außenring des Lagers abstützt.

Nach einer weiteren Ausführungsform ist das Lager auf beiden Seiten jeweils mittels einer dynamischen Dichtung und gegebenenfalls einer statischen Dichtung abgedichtet, wobei diese Dichtungen einerseits den inneren Lagerdeckel gegenüber dem Rollenkörper und andererseits den äußeren Lagerdeckel gegenüber dem Rollenkörper oder dem Dichtungslaufring abdichten.

Mittels dieser beiden vorgenannten Ausführungsformen ist eine effektive und kostengünstige Abdichtung des Lagers auf einfache Art und Weise möglich.

Nach einer Ausführungsform bilden der äußere Lagerdeckel und das axiale Kühlmittelrohr ein Bauteil. Alternativ dazu ist es möglich, das axiale Kühlmittelrohr in eine Ausnehmung des äußeren Lagerdeckels einzusetzen und mit diesem lösbar zu verbinden.

Nach einer zweckmäßigen Ausführungsform ist das axiale Kühlmittelrohr mittels einer statischen Abdichtung, z.B. einem O-Ring, gegenüber dem äußeren Lagerdeckel abgedichtet.

Es ist weiters zweckmäßig, das Dichtelement mittels eines Sicherungselements, beispielsweise eines Sicherungsrings, axial zu sichern.

Die erfindungsgemäße Lagerung und Dreheinführung ist sowohl für eine Kombination von Fest- und Loslager als auch für eine sogenannte schwimmende Lagerung einer Rolle bestens geeignet.

Aufgrund der hohen Belastungen, denen Strangführungsrollen oder Walzwerksrollen ausgesetzt sind, ist es vorteilhaft, die erfindungsgemäße Vorrichtung als eine Strangführungsrolle für eine Stranggießanlage oder als eine Walzwerksrolle für den Rollgang einer Walzeinrichtung für Metall, vorzugsweise Stahl, zu verwenden.

### Kurze Beschreibung der Zeichnungen

Weitere Vorteile und Merkmale der vorliegenden Erfindung ergeben sich aus der nachfolgenden Beschreibung nicht einschränkender Ausführungsbeispiele, wobei auf die folgenden Figuren Bezug genommen wird, die Folgendes zeigen:
Fig. 1 bis 4 vier Ausführungsformen einer Strangführungsrolle mit je einer Lagerung und einer Drehdurchführung
Fig. 5 eine Ausführungsform einer Walzwerksrolle, wobei das Kühlmedium direkt in ein Kühlmittelrohr eingeführt wird

### Beschreibung der Ausführungsformen

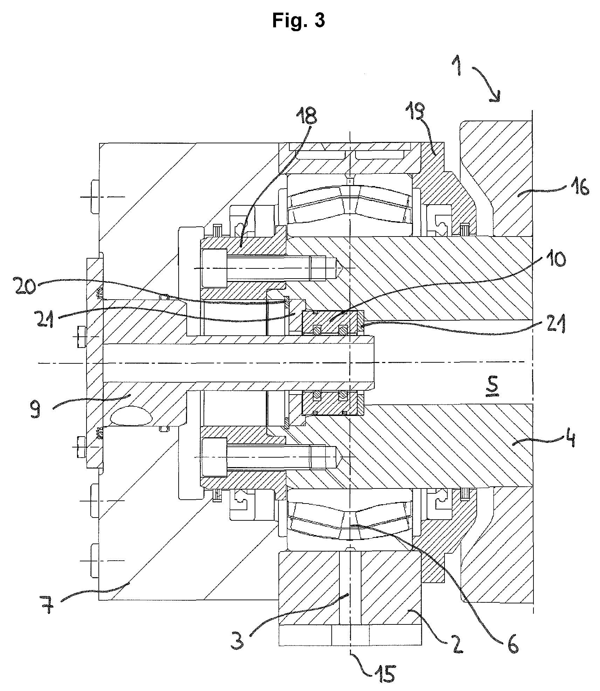

Fig. 1

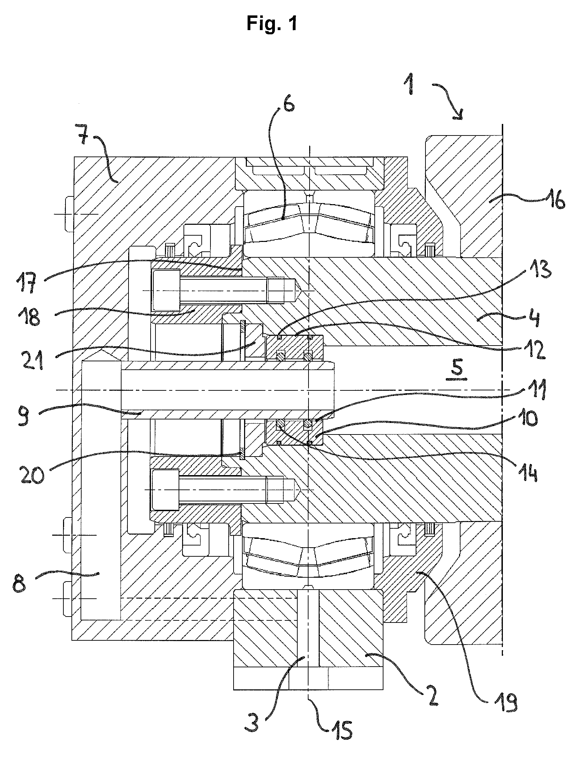

   Fig. 1 zeigt eine erste Ausführungsform einer als Strangführungsrolle 1 ausgebildeten gekühlten Rolle zum Führen und Stützten eines Gießprodukts in einer Stranggießanlage. Hierbei wird das Gießprodukt jeweils oberhalb und unterhalb einer Mittelebene des Gießprodukts von Strangführungsrollen gestützt, wobei mehrere Strangführungsrollen in einem Strangführungssegment abgestützt sind. Der Rollenkörper 4 ist wenigstens zweimal mittels je eines als Pendelrollenlager ausgebildeten Lagers 6 gelagert, wobei die Lager 6 die auf die Strangführungsrolle 1 einwirkenden Kräfte auf den Lagerbock 2 und in weiterer Folge auf das Strangführungssegment übertragen. Um einerseits die Betriebsfestigkeit der Strangführungsrolle 1 zu erhöhen und andererseits das Gießprodukt mittels der Strangführungsrollen 1 zu kühlen, ist eine Strangführungsrolle 1 mit einer Kühleinrichtung ausgebildet. Hierbei wird das Kühlmedium Wasser vom Segment zu wenigstens einem Kühlmittelkanal 3 im Lagerbock 2 geführt, vom Lagerbock 2 in wenigstens einem Kühlmittelkanal 8 im äußeren Lagerdeckel 7, vom äußeren Lagerdeckel 7 in ein Kühlmittelrohr 9 und diesem in einen axialen Kühlmittelkanal 5 in den Rollenkörper 4 geführt. Dabei ist der äußere Lagerdeckel 7 einerseits mit dem Kühlmittelrohr 9 und andererseits über mehrere Schrauben mit dem Lagerbock verbunden. Um eine zuverlässige Abdichtung des Kühlmediums zu gewährleisten, ist das Kühlmittelrohr 9 mit dem Rollenkörper 4 über ein hülsenförmiges Dichtelement 10, das als Prelonring vom Typ V 2 ausgebildet ist, verbunden. Das Dichtelement 10 weist eine innere und eine äußere Mantelfläche 11,12 auf, wobei die innere Mantelfläche 11 über zwei als Gleitringe ausgebildete dynamische Dichtungen 14 fluiddicht mit dem Kühlmittelrohr 9 und die äußere Mantelfläche 12 über zwei als O-Ringe ausgebildete statische Dichtungen 13 fluiddicht mit dem Rollenkörper 4 verbunden sind. Das mit einer automatischen Frischfettschmierung verbundene Pendelrollenlager 6 ist beidseitig mittels je eines Radialwellendichtrings und einer Lamellendichtung abgedichtet, wobei die äußeren Dichtungen zwischen dem äußeren Lagerdeckel 7 und dem Dichtungslaufring 18 und die inneren Dichtungen zwischen dem inneren Lagerdeckel 19 und dem Rollenkörper 4 angebracht sind. Um das Dichtelement 10 axial zu sichern, ist dieses mittels einer Hülse 21 und eines als Bohrungssicherungsrings ausgebildeten Sicherungselements 20 gesichert. Um die Durchbiegung der Strangführungsrolle 1 gegenüber dem Kühlmittelrohr 9 zu minimieren, ist das Dichtelement 10 im Bereich der Lagermittenebene 15 des Lager 6 angeordnet.
Fig. 2

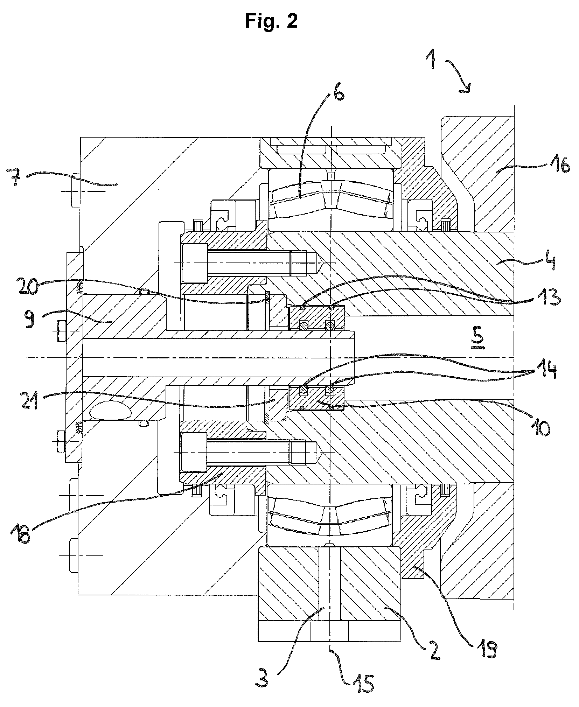

   Fig. 2 zeigt eine weitere Ausführungsform einer Strangführungsrolle 1, wobei in diesem Fall das Kühlmittelrohr 9 in den äußeren Lagerdeckel 7 einsetzbar ausgebildet ist. Das mit dem äußeren Lagerdeckel 7 über mehrere Schrauben verbundene Kühlmittelrohr 9 wird mittels zweier O-Ringe gegenüber dem äußeren Lagerdeckel 7 abgedichtet. Aus Gründen der Übersichtlichkeit wurde auf die Darstellung des Kühlmittelkanals im äußeren Lagerdeckel 7 verzichtet.
Fig. 3
   Auch die Fig. 3 zeigt eine weitere Ausführungsform einer Strangführungsrolle 1, wobei in diesem Fall gegenüber Fig. 2 eine andere axiale Sicherung des Dichtelements 10 verwendet wurde. Mittels dieser Ausführungsform ist es einfach möglich, bestehende Rollen auf die erfindungsgemäße Vorrichtung umzurüsten, wobei die Abmessungen bestehender ringförmiger Ausnehmungen zwischen dem Rollenkörper 4 und dem Kühlmittelrohr 9 für die Aufnahme des Dichtelements 10 weiterverwendet werden und ein Zwischenraum in einfacher Weise durch Hülsen 21 ausgefüllt wird, sodass das Dichtelement 10 axial gesichert ist.
Fig. 4

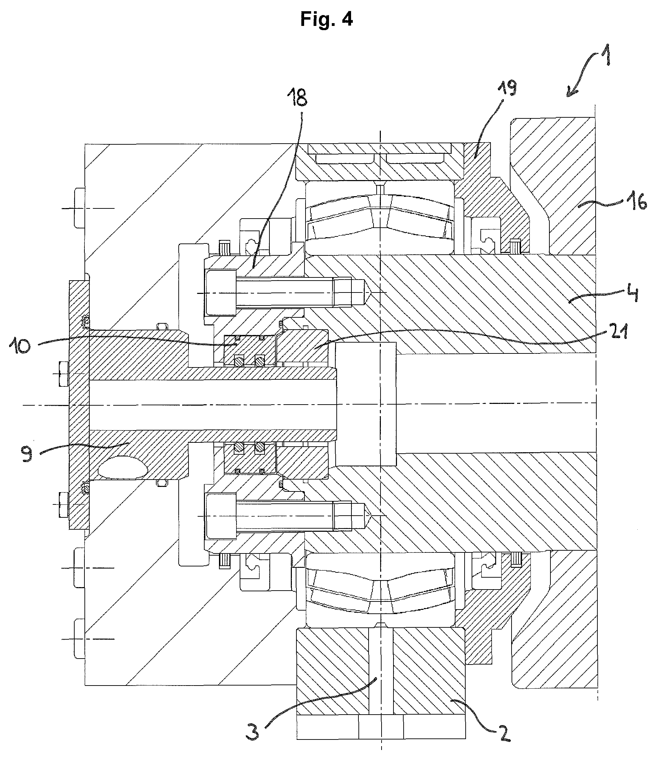

   Fig. 4 zeigt eine weitere Ausführungsform einer Strangführungsrolle 1, wobei in diesem Fall das Dichtelement 10 einerseits von einer Hülse 21 und andererseits von dem Dichtungslaufring 18 axial gesichert wird.
Fig. 5

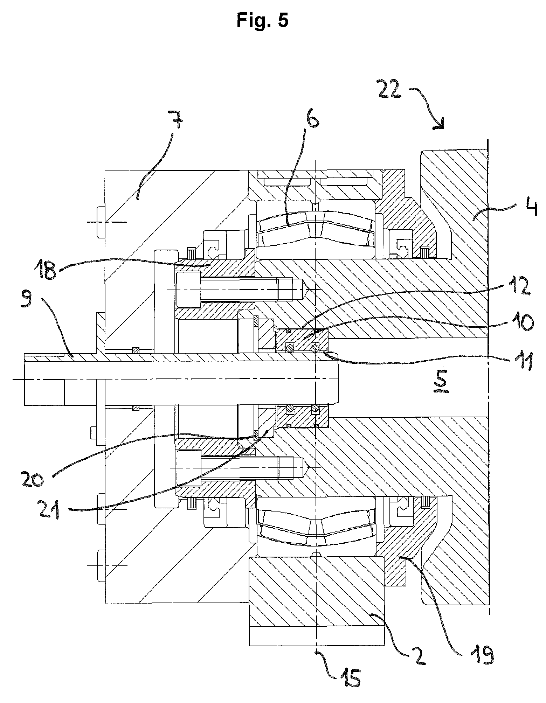

   Fig. 5 zeigt eine Ausführungsform einer gekühlten Rolle 22 zur Führung eines Walzguts auf einem Rollgang in einem Warmwalzwerk. Hierbei umfasst die Lagerung und die Dreheinführung einen Lagerbock 2; einen rollenförmigen Rollenkörper 4 zum Führen und Stützen eines Gieß- oder Walzprodukts in einem Walzwerk mit einem zumindest eintrittsseitig zentralen Kühlmittelkanal 5 für ein Kühlmedium; ein Lager 6 zur drehbaren Abstützung des Rollenkörpers 4 gegenüber dem Lagerbock 2, wobei die Kräfte vom Rollenkörper 4 über das Lager 6 auf den Lagerbock 2 übertragen werden; einen äußeren Lagerdeckel 7 der mittels Schrauben mit dem Lagerbock 2 verbunden ist; und ein mit dem äußeren Lagerdeckel 7 verbundenes Kühlmittelrohr 9 zur Einführung des Kühlmediums in den Kühlmittelkanal 5 des Rollenkörpers 4, wobei das Kühlmittelrohr 9 mit dem Rollenkörper 4 über wenigstens ein hülsenförmiges Dichtelement 10 mit einer inneren und einer äußeren Mantelfläche 11,12 verbunden ist und die innere Mantelfläche 11 dichtend mit dem Kühlmittelrohr 9 und die äußere Mantelfläche 12 dichtend mit dem Rollenkörper 4 verbunden ist.

Im Gegensatz zu den vorgenannten Ausführungsformen wird das Kühlmedium nicht über den Lagerbock 2 und den äußeren Lagerdeckel 7 in das Kühlmittelrohr 9 geführt, sondern direkt von einer nicht dargestellten Kühlmittelleitung in das Kühlmittelrohr 9 geführt. Die Abdichtung des Kühlmittelrohrs 9 bzw. des Kühlmittelkanals 5 im Rollenkörper 4 erfolgt analog zu den Ausführungsformen der Fig. 1 und 2.

### Liste der Bezugszeichen

- 1: Strangführungsrolle
- 2: Lagerbock
- 3: Kühlmittelkanal im Lagerbock
- 4: Rollenkörper
- 5: Kühlmittelkanal im Rollenkörper
- 6: Lager
- 7: äußerer Lagerdeckel
- 8: Kühlmittelkanal im äußeren Lagerdeckel
- 9: Kühlmittelrohr
- 10: Dichtelement
- 11: innere Mantelfläche
- 12: äußere Mantelfläche
- 13: statische Dichtung
- 14: dynamische Dichtung
- 15: Lagermittenebene
- 16: Rollenmantel
- 17: Stirnfläche
- 18: Dichtungslaufring
- 19: innerer Lagerdeckel
- 20: Sicherungselement
- 21: Hülse
- 22: Rolle

## Patentansprüche

1. Lagerung und Dreheinführung für eine gekühlte Rolle (1), umfassend
- einen Lagerbock (2);
- einen rollenförmigen Rollenkörper (4) zum Führen und Stützen eines Gieß- oder Walzprodukts mit einem zumindest eintrittsseitig zentralen Kühlmittelkanal (5) für ein Kühlmedium;
- zumindest ein Lager (6) zur drehbaren Abstützung des Rollenkörpers (4) gegenüber dem Lagerbock (2), wobei die Kräfte vom Rollenkörper (4) über das Lager (6) auf den Lagerbock (2) übertragen werden;
- einen äußeren Lagerdeckel (7) der lösbar mit dem Lagerbock (2) verbunden ist;
- ein mit dem äußeren Lagerdeckel (7) verbundenes stillstehendes Kühlmittelrohr (9) zur Einführung des Kühlmediums in den Kühlmittelkanal (5) des Rollenkörpers (4) ;
- ein hülsenförmiges Dichtelement (10) mit einer inneren und einer äußeren Mantelfläche (11,12), wobei das stillstehende Kühlmittelrohr (9) mit dem Rollenkörper (4) über das hülsenförmige Dichtelement (10) verbunden ist, wobei die innere Mantelfläche (11) dichtend mit dem stillstehenden Kühlmittelrohr (9) und die äußere Mantelfläche (12) dichtend mit dem rotierbaren Rollenkörper (4) verbunden ist, und wobei das Dichtelement (10) auf seiner äußeren Mantelfläche (12) zumindest eine, bevorzugt zumindest zwei, statische Dichtung (13) und auf seiner inneren Mantelfläche (11) zumindest eine, bevorzugt zumindest zwei, dynamische Dichtung (14) aufweist;
**dadurch gekennzeichnet,**
**dass** das Dichtelement (10) um einen Umfang des Kühlmittelrohrs (9) herum angeordnet ist.

2. Vorrichtung nach Anspruch 1, **dadurch gekennzeichnet, dass** der Lagerbock (2) wenigstens einen Kühlmittelkanal (3) zur Führung eines unter Druck stehenden Kühlmediums aufweist; **dass** der äußere Lagerdeckel (7) zumindest einen Kühlmittelkanal (8) für das Kühlmedium aufweist; sodass das Kühlmedium vom Lagerbock (2) in den äußeren Lagerdeckel (7), vom äußeren Lagerdeckel (7) in das Kühlmittelrohr (9) und vom Kühlmittelrohr (9) in den Kühlmittelkanal (5) des Rollenkörpers (4) geführt wird.

3. Vorrichtung nach einem der Ansprüche 1 oder 2, **dadurch gekennzeichnet, dass** eine statische Dichtung (13) als ein O-Ring und eine dynamische Dichtung (14) als ein Gleitring ausgebildet ist.

4. Vorrichtung nach einem der Ansprüche 1 bis 3, **dadurch gekennzeichnet, dass** das Kühlmittelrohr (9) gegenüber dem Dichtelement (10) verschieblich ausgebildet ist.

5. Vorrichtung nach einem der Ansprüche 1 bis 4, **dadurch gekennzeichnet, dass** das Dichtelement (10) im Bereich einer Lagermittenebene (15) des Lagers (6) angeordnet ist.

6. Vorrichtung nach einem der Ansprüche 1 bis 5, **dadurch gekennzeichnet, dass** der Rollenkörper (4) mit einem Rollenmantel (16) drehfest verbunden ist.

7. Vorrichtung nach einem der Ansprüche 1 bis 6, **dadurch gekennzeichnet, dass** ein Lager (6) beidseitig abgedichtet ausgebildet ist.

8. Vorrichtung nach einem der Ansprüche 1 bis 7, **dadurch gekennzeichnet, dass** eine Stirnfläche (17) des Rollenkörpers (4) mit einem ringförmigen Dichtungslaufring (18) verbunden ist.

9. Vorrichtung nach einem der Ansprüche 1 bis 8, **dadurch gekennzeichnet, dass** ein Lagerbock (2) in Richtung der Rollenmittenebene mit einem inneren Lagerdeckel (19) lösbar verbunden ist, wobei gegebenenfalls der innere Lagerdeckel (19) den Innenring oder den Außenring des Lagers (6) abstützt.

10. Vorrichtung nach einem der Ansprüche 7 bis 9, **dadurch gekennzeichnet, dass** das Lager (6) auf beiden Seiten jeweils mittels einer dynamischen Dichtung (14) und gegebenenfalls einer statischen Dichtung (13) abgedichtet ist, wobei diese Dichtungen (13,14) einerseits den inneren Lagerdeckel (19) gegenüber dem Rollenkörper (4) und andererseits den äußeren Lagerdeckel (7) gegenüber dem Rollenkörper (4) oder dem Dichtungslaufring (18) abdichten.

11. Vorrichtung nach einem der Ansprüche 1 bis 10, **dadurch gekennzeichnet, dass** der äußere Lagerdeckel (7) und das Kühlmittelrohr (9) ein Bauteil bilden.

12. Vorrichtung nach einem der Ansprüche 1 bis 10, **dadurch gekennzeichnet, dass** das Kühlmittelrohr (9) in eine Ausnehmung des äußeren Lagerdeckels (7) eingesetzt und mit diesem lösbar verbunden ist.

13. Vorrichtung nach Anspruch 12, **dadurch gekennzeichnet, dass** das Kühlmittelrohr (9) mittels einer statischen Dichtung (13) gegenüber dem äußeren Lagerdeckel (7) abgedichtet ist.

14. Vorrichtung nach einem der Ansprüche 1 bis 13, **dadurch gekennzeichnet, dass** das Dichtelement (10) mittels eines Sicherungselements (20) axial gesichert ist.

## Claims

1. Bearing arrangement and rotary inlet for a cooled roller (1), comprising
- a bearing block (2);
- a roller-shaped roller body (4) for guiding and supporting a cast or rolled product having an, at least on the entry side, central coolant channel (5) for a cooling medium;
- at least one bearing (6) for rotatably supporting the roller body (4) in relation to the bearing block (2), wherein the forces are transmitted from the roller body (4) via the bearing (6) to the bearing block (2);
- an outer bearing cover (7), which is detachably connected to the bearing block (2);
- a stationary coolant tube (9), connected to the outer bearing cover (7), for introducing the cooling medium into the coolant channel (5) of the roller body (4);
- a sleeve-shaped sealing element (10) having an inner and an outer contacting surface (11, 12), wherein the stationary coolant tube (9) is connected to the roller body (4) by the sleeve-shaped sealing element (10), wherein the inner contacting surface (11) is sealingly connected to the stationary coolant tube (9) and the outer contacting surface (12) is sealingly connected to the rotating roller body (4), and wherein the sealing element (10) has on its outer contacting surface (12) at least one, preferably at least two, static seal(s) (13), and on its inner contacting surface (11) at least one, preferably at least two, dynamic seal(s) (14);
**characterized in that** the sealing element (10) is arranged around a circumference of the coolant tube (9).

2. Apparatus according to Claim 1, **characterized in that** the bearing block (2) has at least one coolant channel (3) for the guidance of a pressurized cooling medium;
**in that** the outer bearing cover (7) has at least one coolant channel (8) for the cooling medium;
so that the cooling medium is guided from the bearing block (2) into the outer bearing cover (7), from the outer bearing cover (7) into the coolant tube (9), and from the coolant tube (9) into the coolant channel (5) of the roller body (4).

3. Apparatus according to one of Claims 1 or 2, **characterized in that** a static seal (13) is configured as an O-ring and a dynamic seal (14) is configured as a slip ring.

4. Apparatus according to one of Claims 1 to 3, **characterized in that** the coolant tube (9) is configured such that it is displaceable in relation to the sealing element (10).

5. Apparatus according to one of Claims 1 to 4, **characterized in that** the sealing element (10) is disposed in the region of a bearing center plane (15) of the bearing (6).

6. Apparatus according to one of Claims 1 to 5, **characterized in that** the roller body (4) is connected in a rotationally secure manner to a roller casing (16).

7. Apparatus according to one of Claims 1 to 6, **characterized in that** a bearing (6) is configured such that it is sealed on both sides.

8. Apparatus according to one of Claims 1 to 7, **characterized in that** an end face (17) of the roller body (4) is connected to an annular seal race (18).

9. Apparatus according to one of Claims 1 to 8, **characterized in that** a bearing block (2) is detachably connected in the direction of the roller center plane to an inner bearing cover (19), wherein, where necessary, the inner bearing cover (19) supports the inner ring or the outer ring of the bearing (6).

10. Apparatus according to one of Claims 7 to 9, **characterized in that** the bearing (6) is sealed on both sides respectively by means of a dynamic seal (14) and, where necessary, a static seal (13), wherein these seals (13, 14), on the one hand, seal off the inner bearing cover (19) with respect to the roller body (4) and, on the other hand, the outer bearing cover (7) with respect to the roller body (4) or the seal race (18).

11. Apparatus according to one of Claims 1 to 10, **characterized in that** the outer bearing cover (7) and the axial coolant tube (9) form a component part.

12. Apparatus according to one of Claims 1 to 10, **characterized in that** the coolant tube (9) is inserted in a recess of the outer bearing cover (7) and detachably connected to the latter.

13. Apparatus according to Claim 12, **characterized in that** the coolant tube (9) is sealed with respect to the outer bearing cover (7) by means of a static seal (13).

14. Apparatus according to one of Claims 1 to 13, **characterized in that** the sealing element (10) is axially secured by means of a locking element (20).

## Revendications

1. Support et insert rotatif pour un rouleau refroidi (1), comprenant
- un support de palier (2) ;
- un corps de rouleau (4), en forme de rouleau, destiné à guider et soutenir un produit de coulée ou de laminage avec un canal central de liquide de refroidissement (5), au moins côté entrée, destiné à un fluide caloporteur ;
- au moins un palier (6) destiné à un soutien pivotant du corps de rouleau (4) par rapport au support de palier (2), dans lesquels les forces sont transmises du corps de rouleau (4) au support de palier (2) par l'intermédiaire du palier (6) ;
- un chapeau extérieur de palier (7), qui est relié amovible au support de palier (2) ;
- un conduit de liquide de refroidissement (9) immobile relié au chapeau extérieur de palier (7), destiné à introduire le fluide caloporteur dans le canal de liquide de refroidissement (5) du corps de rouleau (4) ;
- un élément d'étanchéité (10) en forme de manchon avec une enveloppe intérieure et une enveloppe extérieure (11, 12), dans lesquels le conduit de liquide de refroidissement (9) immobile est relié au corps de rouleau (4) par l'intermédiaire de l'élément d'étanchéité (10) en forme de manchon, dans lesquels l'enveloppe intérieure (11) est reliée de manière étanche au conduit de liquide de refroidissement (9) immobile et l'enveloppe extérieure (12) est reliée de manière étanche au corps de rouleau (4) rotatif, et dans lesquels l'élément d'étanchéité (10) présente sur son enveloppe extérieure (12) au moins un, de manière préférée au moins deux, joint d'étanchéité statique (13) et présente sur son enveloppe intérieure (11) au moins un, de manière préférée au moins deux, joint d'étanchéité dynamique (14) ;
**caractérisé en ce que**,
l'élément d'étanchéité (10) est agencé autour d'une périphérie du conduit de liquide de refroidissement (9).

2. Dispositif selon la revendication 1, **caractérisé en ce que**,
le support de palier (2) présente au moins un canal de liquide de refroidissement (3) destiné à guider un fluide caloporteur sous pression ;
le chapeau extérieur de palier (7) présente au moins un canal de liquide de refroidissement (8) pour le fluide caloporteur ;
de telle manière que le fluide caloporteur est guidé du support de palier (2) jusqu'au chapeau extérieur de palier (7), du chapeau extérieur de palier (7) jusqu'au conduit de liquide de refroidissement (9) et du conduit de liquide de refroidissement (9) jusqu'au canal de liquide de refroidissement (5) du corps de rouleau (4).

3. Dispositif selon la revendication 1 ou 2, **caractérisé en ce qu'**un joint d'étanchéité statique (13) est réalisé en tant qu'anneau rond et un joint d'étanchéité dynamique (14) est réalisé en tant qu'anneau coulissant.

4. Dispositif selon l'une quelconque des revendications 1 à 3, **caractérisé en ce que** le conduit de liquide de refroidissement (9) est réalisé déplaçable par rapport à l'élément d'étanchéité (10).

5. Dispositif selon l'une quelconque des revendications 1 à 4, **caractérisé en ce que** l'élément d'étanchéité (10) est agencé dans le secteur d'un plan médian de palier (15) du palier (6).

6. Dispositif selon l'une quelconque des revendications 1 à 5, **caractérisé en ce que** le corps de rouleau (4) est relié fixe en rotation à une enveloppe de rouleau (16).

7. Dispositif selon l'une quelconque des revendications 1 à 6, **caractérisé en ce qu'**un palier (6) est réalisé de manière étanchéifiée des deux côtés.

8. Dispositif selon l'une quelconque des revendications 1 à 7, **caractérisé en ce qu'**une surface frontale (17) du corps de rouleau (4) est reliée à un anneau de roulement d'étanchéité (18) de forme annulaire.

9. Dispositif selon l'une quelconque des revendications 1 à 8, **caractérisé en ce qu'**un support de palier (2) est relié amovible à un chapeau intérieur de palier (19) en direction du plan médian de rouleau, dans lequel éventuellement le chapeau intérieur de palier (19) soutient la bague intérieure ou la bague extérieure du palier
(6).

10. Dispositif selon l'une quelconque des revendications 7 à 9, **caractérisé en ce que** le palier (6) est étanchéifié des deux côtés respectivement au moyen d'un joint d'étanchéité dynamique (14) et éventuellement d'un joint d'étanchéité statique (13), dans lequel lesdits joints d'étanchéité (13, 14) étanchéifient d'une part le chapeau intérieur de palier (19) par rapport au corps de rouleau (4) et d'autre part le chapeau extérieur de palier (7) par rapport au corps de rouleau (4) ou à la bague de roulement d'étanchéité (18).

11. Dispositif selon l'une quelconque des revendications 1à 10, **caractérisé en ce que** le chapeau extérieur de palier (7) et le conduit de liquide de refroidissement (9) forment un élément.

12. Dispositif selon l'une quelconque des revendications 1 à 10, **caractérisé en ce que** le conduit de liquide de refroidissement (9) est inséré dans un évidement du chapeau extérieur de palier (7) et est relié amovible à celui-ci.

13. Dispositif selon la revendication 12, **caractérisé en ce que** le conduit de liquide de refroidissement (9) est étanchéifié par rapport au chapeau extérieur de palier (7) au moyen d'un joint d'étanchéité statique (13).

14. Dispositif selon l'une quelconque des revendications 1 à 13, **caractérisé en ce que** l'élément d'étanchéité (10) est bloqué de manière axiale au moyen d'un élément de blocage (20).
